# EUROPEAN PATENT APPLICATION

(11) **EP 2 965 962 A2**
(43) Date of publication of application: **13.01.2016**
(21) Application number: 15175542.8
(22) Date of filing: 06.07.2015
(51) Int. Cl.: B60T 13/74, B60T 8/17, B60T 8/88

(54) **APPARATUS AND SYSTEM FOR POWER DISTRIBUTION TO BRAKE SYSTEMS**

(30) Priority: 07.07.2014 US 201414324987
(71) Applicant: Goodrich Corporation, Charlotte, NC 28217-4578 (US)
(72) Inventor: GEORGIN, Marc, Dayton, OH Ohio 45419 (US); PANT, Albert Keith, Carlisle, OH Ohio 45005 (US)
(74) Representative: Hull, James Edward

(57) **Abstract**

A low voltage DC power system for powering an aircraft brake actuator assembly (230). The brake actuator assembly (230) may comprise an electric actuator motor system with a park brake (232) and/or a hybrid electric hydraulic system with a park brake (332). The brake actuator assembly (230) may also comprise a load cell (234) and one or more sensors (236). The load cell (234) and sensors (334) may be configured to operate with low voltage DC power. Moreover, by employing a low voltage DC power system, the wiring of an aircraft brake system (200) may be reduced and/or simplified.

## Description

### FIELD

The present disclosure relates to brake system power distribution systems, and more particularly, to power distribution systems with efficient wiring systems.

### BACKGROUND

Existing sensors used in electric braking systems may employ sensors and/or monitoring devices that operate with alternating current ("AC") power. Moreover, these sensors, load cells, and park brakes may require multiples wires to provide power and feedback. For example, each actuator in a brake system of a known jet aircraft may be connected by, for example, 14 wires. Thus, for a brake system with 8 actuators may include, for example, 112 wires. These multiple wires may increase the weight of the brake system, the complexity of implementing the brake system, and may reduce the overall reliability of the brake system.

### SUMMARY

In various embodiments, a brake power distribution system may comprise a control system, a conditioning circuit, a park brake, and a sensor. The conditioning circuit may be in electronic communication with the control system. The conditioning circuit may be configured to condition power from the control system to a first voltage level and a second voltage level. The park brake may be configured to receive power at the first level from the conditioning circuit via a first power line. The sensor may be configured to receive power at the second voltage level from the conditioning circuit via a second power line.

In various embodiments, a brake system may comprise a brake stack, a brake actuator assembly, and a control system. The brake actuator assembly may be configured to exert a force on the brake stack. The brake actuator assembly may comprise a park brake, a load cell, and a sensor. The load cell may be configured to measure the force on the brake stack. The sensor may be configured to monitor the brake actuator assembly. The control system may be in electrical communication with the brake actuator assembly. The control system may be configured to supply direct current power to the park brake at a first level. The control system may also be configured to supply direct current power to the sensor at a second level. The control system may be further configured to supply direct current power to the load cell at a second power level or a third power level.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 is a block diagram illustrating exemplary components in a brake system, in accordance with various embodiments;
FIG. 2A is a first wire diagram of a portion of a brake system, in accordance with various embodiments;
FIG. 2B is a second wire diagram of a portion of an electric brake system, in accordance with various embodiments;
FIG. 2C is a third wire diagram of a portion of an electric brake system including a conditioning circuit, in accordance with various embodiments;
FIG. 3A is a fourth wire diagram of a portion of a hybrid electric-hydraulic brake system, in accordance with various embodiments; and
FIG. 3B is a fifth wire diagram of a portion of a hybrid electric-hydraulic brake system including a conditioning circuit, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein. Thus, the detailed description herein is presented for purposes of illustration only and not of limitation. The scope of the disclosure is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

In various embodiments, the systems and apparatuses described herein may use new sensors and electric brake actuators to combine signals. In this regard, the ability to combine signals may tend to minimize the number of wires needed for the electrical architecture of a brake system while maintaining current functionalities.

In various embodiments, the power distribution schemes described herein for brake systems that use electric motor actuators ("EMA") may be configured to provide power signals to various EMA components, systems, and/or sensors including, for example, the load cell, the sensor, the park brake, and/or the like. This power distribution architecture may provide significant weight savings to aircraft by reducing the total number of wires needed to power a brake system using EMAs between the control system and the site where the brake system and/or EMA is installed (e.g., on the brake and/or the landing gear). Moreover, this power distribution architecture may decrease the overall complexity of the system reducing maintenance and implementation time, while increasing overall reliability of the system.

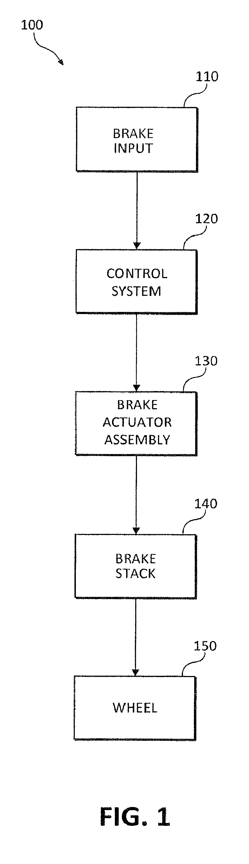

In various embodiments and with reference to FIG. 1, brake system 100 may comprise a brake input 110, a control system 120, a brake actuator assembly 130, a brake stack 140, and a wheel 150. In various embodiments, brake system 100 may include power distribution architecture. The power distribution architecture may include connectors, wiring, and/or the like.

In various embodiments, brake input 110 may be any suitable brake input. For example, brake input 110 may be a pedal, lever, switch, and/or the like. Brake input 110 may be configured to receive a command from an aircraft operator (e.g., a pilot or co-pilot).

In various embodiments, control system 120 may be any suitable brake control system configured to command and/or provide power to various other components of brake system 100. Control system 120 may receive inputs from brake input 110. Control system 120 may be in electromechanical, mechanical, and/or electrical communication with brake input 110. Control system 120 may also be in electrical, mechanical, and/or electromechanical communication with brake actuator assembly 130, brake stack 140, and/or wheel 150. In various embodiments, control system 120 may be configured to control and power various components of brake system 100 including, for example, brake actuator assembly 130.

In various embodiments, control system 120 may include one or more electromechanical actuator controllers (e.g. an EMAC), one or more brake system control units (e.g., a BSCU), and/or the like. Control system 120 may be configured as a direct current ("DC") power source. In this regard, control system 120 may be configured to distribute DC power to various components of brake system 100, including, for example, brake actuator assembly 130.

In various embodiments, brake actuator assembly 130 may be any suitable brake actuator configured with and/or capable of using electric motor actuators. In this regard, brake actuator assembly 130 may be a brake actuator assembly comprising one or more electric motor actuators. Brake actuator assembly 130 and, more specifically, the electric motor actuators may be configured to actuate components of brake system 100. In this regard, brake actuator assembly may be configured to force brake stack 140 to act upon wheel 150. Brake actuator assembly 130 may also be part of a hybrid electric-hydraulic brake actuator assembly. Brake actuator assembly 130 may comprise one or more electric motor actuators configured to pressurize hydraulic fluid. In this regard, brake actuator assembly 130 may be used to drive one or more pistons to force and/or drive brake stack 140 to act upon wheel 150.

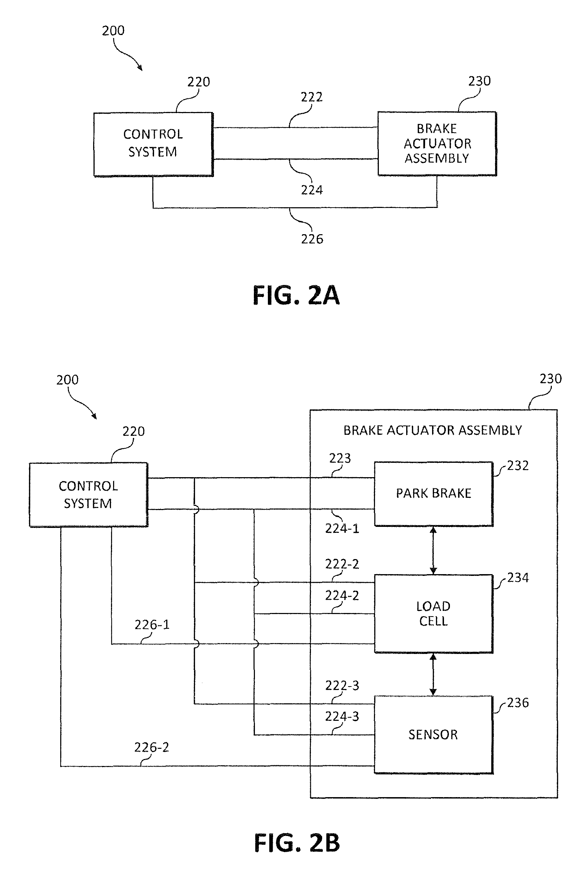

In various embodiments and with reference to FIG. 2A, brake system 200 may comprise a control system 220 operatively coupled to and in electrical communication with brake actuator assembly 230. In this regard, control system 220 and brake actuator assembly 230 may be coupled together by a power line 222, a return line 224, and a feedback system 226. Power line 222 may be configured to provide low voltage DC power to brake actuator assembly 230 components. Return line 224 may be configured to close the circuit between control system 220 and brake actuator assembly 230. Feedback system 226 may be configured to provide control system 220 with data from various components of brake actuator assembly 230, including, for example, a park brake, a load cell, and/or one or more sensors.

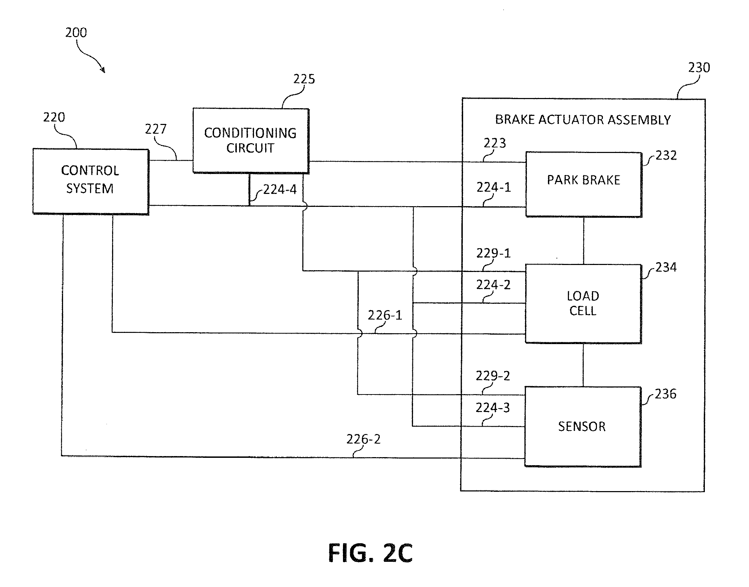

In various embodiments and with reference to FIG. 2B and 2C, brake system 200 may be configured with a brake actuator assembly 230 comprising a park brake 232, a load cell 234, and one or more sensors 236. Park brake 232 may be any suitable park brake mechanism that is operable with low DC voltage (e.g., 28 V_{DC} power or less). Park brake 232 may also be supplied with high DC voltage such as, for example, approximately 270 V_{DC}, 130 V_{DC}, and/or the like. For example, park brake 232 may be configured to operate with 2 V_{DC} to 18 V_{DC}. More specifically, park brake 232 may be configured to operate with 4 V_{DC} to 8 V_{DC}. Similarly, Load cell 234 may be any suitable load cell that is operable with low voltage DC power (e.g., 28 V_{DC} power or less). For example, load cell 234 may be configured to operate with 2 V_{DC} to 18 V_{DC}. More specifically, load cell 234 may be configured to operate with 4 V_{DC} to 8 V_{DC}. Sensor 236 may be any suitable sensor that is operable with low voltage DC power (e.g., 28 V_{DC} power or less). For example, sensor 236 may be configured to operate with 2 V_{DC} to 18 V_{DC}. More specifically, sensor 236 may be configured to operate with 4 V_{DC} to 8 V_{DC}.

In various embodiments, park brake 232 may be operatively coupled to and configured to receive power from control system 220 via power line 223. Park brake 232 may also be coupled to return line 224 (e.g., via a return line segment 224-1) that completes the DC power line circuit for park brake 232. Load cell 234 may be operatively coupled to and configured to receive power from control system 220 via power line 222 (e.g., via power line segment 222-2). Load cell 234 may also be coupled to return line 224 (e.g., via a return line segment 224-2) that completes the DC power line circuit for load cell 234. Sensors 236 may be operatively coupled to and configured to receive power from control system 220 via power line 222 (e.g., via power line segment 222-3). Sensor 236 may also be coupled to return line 224 (e.g., via a return line segment 224-3) that completes the DC power line circuit for sensor 236. As such, the supply of low voltage DC power may be supplied via a single power line 222 that comprises one or more segments, junctions, an/or portions that distribute power to the various low power components in brake actuator assembly 230. Similarly, the return line of the low voltage DC power circuit may be a single return line 224 that comprises one or more segments, junctions, an/or portions that complete the power circuit in brake actuator assembly 230.

In various embodiments, brake system 200 may further comprise a feedback system 226 configured to provide feedback from load cell 234 and/or sensor 236 to control system 220 (e.g., via feedback segment 226-1 and/or feedback segment 226-2 respectively). In this regard, feedback system 226 may be configured to conduct data indicative of position, load, stress, strain, temperature, number of cycles and/or any other suitable data to control system 220.

In various embodiments and with particular reference to FIG. 2C, brake system 200 may further comprise a conditioning circuit 225 that is configured to condition power supplied by control system 220 to brake actuator assembly 230. Control system 220 may be configured to supply low voltage DC power to brake actuator assembly 230 at a first level (e.g., 28 V_{DC}). The power supplied at the first level may be of a level that is too high to power one or more components of brake actuator assembly 230, such as, for example, load cell 234 and/or sensor 236. As such, power supplied at the first level via power line 227 may be routed through a conditioning circuit 225. Power supplied at the first level via power line 227 may also be routed directly to one or more brake actuator assembly 230 components such as, for example, park brake 232 via power line 223. In this regard, power line 227 and power line 223 may be the same power line.

In various embodiments, conditioning circuit 225 may be configured to condition and/or manage power provided from control system 220 via power line 223 to one or more of the various components of brake actuator assembly 230 including, for example, park brake 232 (e.g., via power line 223) and/or other brake actuator assembly 230 components. Conditioning circuit 225 may also be configured to condition and/or manage power provided from control system 220 via one or more power lines (e.g., power line segment 229-1 and power line segment 229-2, as shown in FIG. 2C) to one or more of the various components of brake actuator assembly 230 including, for example, load cell 234 (e.g., via power line segment 225-1), and/or sensor 236 (e.g., via power line segment 225-2). In this regard, the components of brake actuator assembly 230 may be supplied at various voltage levels via various power supplies where each of the voltage levels and power supplies is conditioned and routed through conditioning circuit 225.

In various embodiments, conditioning circuit 225 may be coupled to return line 224 (e.g., via return line segment 224-4) that is operatively coupled to in an electrical communication with control system 220. As has been described herein, load cell 234 and sensor 236 may be configured with feedback system 226 (e.g. via feedback segment 226-1 and feedback segment 226-2, respectively) that is configured to provide feedback from load cell 234 and sensor 236 to control system 220.

In various embodiments, conditioning circuit 225 may be a component that is installed on and/or a portion of control system 220. Conditioning circuit 225 may also be a component that is installed on or in a portion of brake actuator assembly 230. Moreover, conditioning circuit 225 may be configured as a power hub. Conditioning circuit 225 may be configured to receive either AC or DC power from control system 220, condition that power, and distribute the power to the various components of brake actuator assembly 230. In this regard, conditioning circuit 225 may be configured to reduce and/or step down the voltage level of the DC voltage being supplied to one or more brake system components. Conditioning circuit 225 may also be configured to convert AC voltage to DC voltage. Conditioning circuit 225 may comprise a rectifier, a DC to DC converter, and/or any other suitable voltage conditioning structures. Where conditioning circuit 225 receives AC power, power line 227 may be configured as an AC power supply and return line 224-4 may be configured as a common and/or ground line.

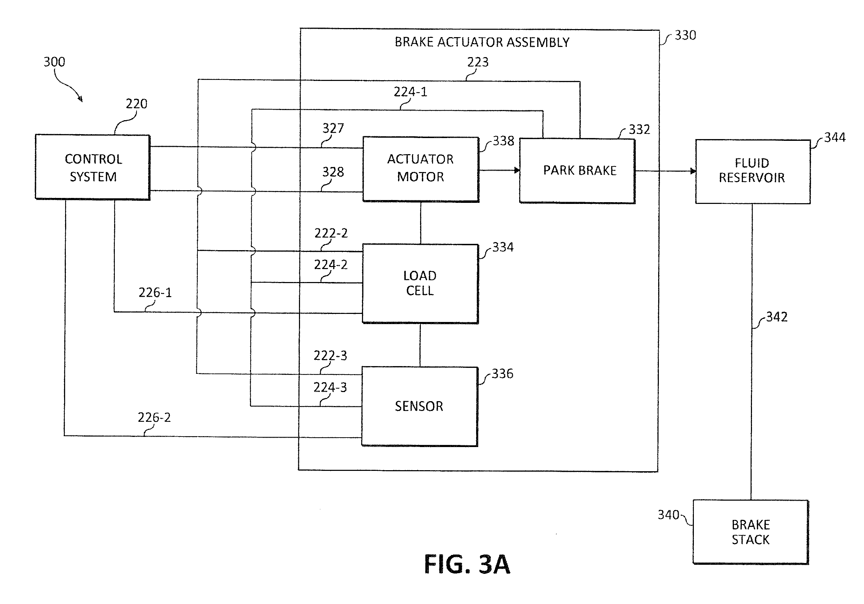

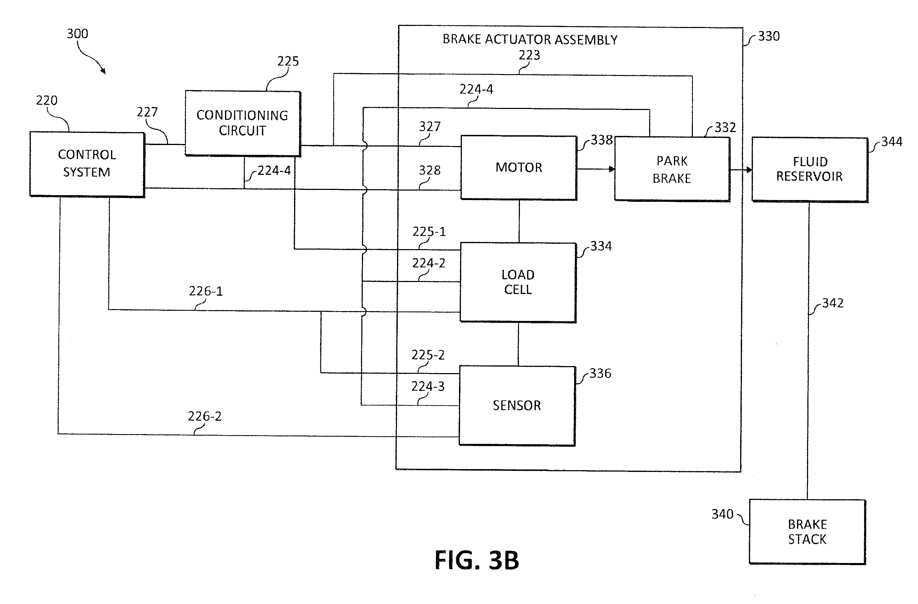

In various embodiments and with reference to FIGs. 3A and 3B, brake system 300 may be configured as a hybrid electric-hydraulic system. Brake system 300 may comprise a park brake 332, an actuator motor 338, a load cell 334, and a sensor 336. Actuator motor 338 may be any suitable motor configured to pump for the hydraulic fluid in fluid reservoir 344. In this regard, Actuator motor 338 may increase the pressure in fluid reservoir 344 to create a force on brake stack 340. Actuator motor 338 may operate at relatively high DC voltage such as, for example, approximately 270 V_{DC}, 130 V_{DC}, and/or the like. This high DC voltage may be supplied to actuator motor 338 via a motor power supply 327. Actuator motor 338 may also be coupled to a motor return line 328 that completes the electrical circuit for actuator motor 338.

In various embodiments, park brake 332 may be operatively coupled to fluid reservoir 344 and actuator motor 338. In this regard, park brake 332 may be configured to control, shut-off and/or supply hydraulic fluid from fluid reservoir 344 to actuator motor 338. The pressure in fluid reservoir 344 may drive a structure 342 that is configured to translate the fluid pressure in fluid reservoir 344 to a force on brake stack 340.

In various embodiments, brake system may include a control system 220 configured to distribute DC power to the various components of brake actuator assembly 330 as generally discussed herein. Moreover, in various embodiments and with reference to FIG. 3B, brake system 300 may further comprise a conditioning circuit 225. Conditioning circuit 225 may be any suitable conditioning circuit as discussed herein.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A brake power distribution system, comprising:
a control system (120; 220);
a park brake (232; 332) configured to receive power at a first voltage level from the control system (120; 220) via a first power line (223);
a sensor (236; 336) configured to receive power at a second voltage level from the control system via a second power line (222); and
a load cell (234; 334) configured to receive power at the second voltage level from the control system (120; 220) via the second power line (222).

2. The brake power distribution system of claim 1, further comprising a conditioning circuit (225) in electrical communication with the control system (120; 220) and configured to condition power from the control system (120; 220) to the first voltage level and the second voltage level.

3. The brake power distribution system of claim 2, wherein the park brake (132; 332) and the sensor (236; 336) are part of a brake actuator assembly (130; 230; 330).

4. The brake power distribution system of claim 3, wherein the conditioning circuit (225) is a portion of at least one of the brake actuator assembly (130; 230; 330) or the control system (120; 220).

5. The brake power distribution system of any preceding claim, wherein the park brake (232; 332) is configured to control hydraulic fluid.

6. The brake power distribution system of any preceding claim, further comprising a fluid reservoir (344) in fluid communication with the park brake (332) and an actuator motor (338), wherein the park brake (332) is configured to control fluid flow between the fluid reservoir (344) and the actuator motor (338).

7. The brake power distribution system of any preceding claim, further comprising a first feedback system (226-2) configured to provide first data from the sensor (236; 336) to the control system (120; 220) and a second feedback system (226-1) configured to provide second data from the load cell (234; 334) to the control system (120; 220).

8. The brake power distribution system of any preceding claim, wherein power at the second voltage level is within a range of 4 V_{DC} to 30 V_{DC}.

9. The brake power distribution system of any preceding claim, wherein the control system (120; 220) is configured to supply a or the conditioning circuit (225) with power at the first voltage level.

10. The brake power distribution system of any preceding claim, wherein a or the conditioning circuit (225) is configured to reduce power supplied by the control system (120; 220) to the second voltage level.

11. A brake system (100; 200; 300) comprising:
a brake stack (140; 340);
a brake actuator assembly (130; 230; 330) configured to exert a force on the brake stack (140; 340), the brake actuator assembly (130; 230; 330) comprising:
a park brake (232; 332);
a load cell (234; 334) configured to measure the force on the brake stack (140; 340); and
a sensor (236; 336) configured to monitor the brake actuator assembly (130; 230; 330);
a control system (120; 220) in electrical communication with the brake actuator assembly (130; 230; 330) and configured to supply direct current power to the park brake (232; 332) at a first level via a first power line (223) and direct current power to the sensor (236; 336) and the load cell (234; 334) at a second level via a second power line (222).

12. The brake system of claim 11, wherein the park brake (232; 332) is configured to maintain a position of the brake stack (140; 340).

13. The brake system of claim 11 or 12, further comprising a conditioning circuit (225) in electrical communication with the control system (120; 220) and configured to supply direct current power at the first level and the second level.

14. The brake system of claim 11, 12 or 13, further comprising a feedback system (226) configured to provide data from at least one of the sensor (236; 336) or the load cell (234; 334) to the control system (120; 220).

15. The brake system of any of claims 11 to 14, wherein the first level is higher than the second level.
